# EUROPÄISCHE PATENTSCHRIFT

(11) **EP 0 734 906 B1**
(45) Veröffentlichungstag und Bekanntmachung des Hinweises auf die Patenterteilung: **21.11.2001**
(21) Anmeldenummer: 96103439.4
(22) Anmeldetag: 06.03.1996
(51) Int. Cl.: B60R 16/02

(54) **Schaltungsanordnung zur Stromversorgung einer digitalen Rechenschaltung**
Current alimentation circuit for a digital calculation circuit
Circuit pour l'alimentation en courant d'un circuit de calcul digital

(30) Priorität: 29.03.1995 DE 19511567
(43) Veröffentlichungstag der Anmeldung: 02.10.1996
(73) Patentinhaber: Mannesmann VDO AG, 60326 Frankfurt (DE)
(72) Erfinder: Adams, Jürgen, Dipl.-Ing. (FH), 78052 Villingen-Schwenningen (DE)

(56) Entgegenhaltungen:
- EP-A- 0 574 743
- DE-B- 1 269 231

## Beschreibung

Die Erfindung betrifft eine Schaltungsanordnung zur Stromversorgung einer digitalen Rechenschaltung gemäß dem Oberbegriff des ersten Anspruchs, wobei die Rechenschaltung vorzugsweise als Mikroprozessor ausgebildet ist.

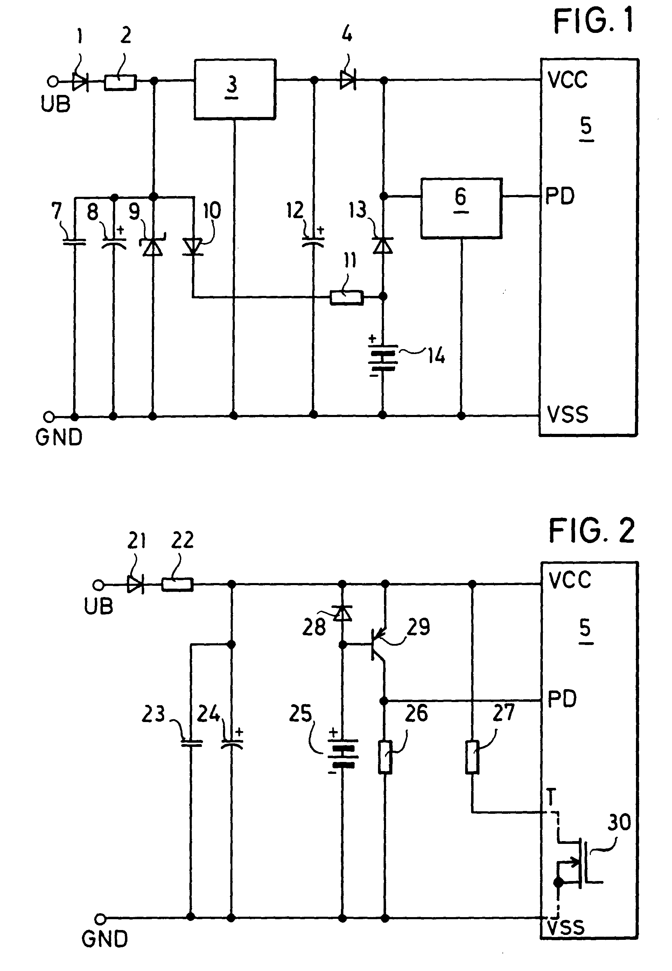

Gattungsgemäße Schaltungsanordnungen zur Verwendung in Kfz-Geräten sind bekannt (siehe zum Beispiel die DE-A-1 269 231). Nach dem Stand der Technik werden diese Schaltungsanordnungen, die auch als Netzteile bezeichnet werden und von denen eine Ausführung exemplarisch in Figur 1 dargestellt ist, mit komplexen integrierten Spannungsreglern 3 und gegebenenfalls auch mit einem als Spannungswächter 6 ausgebildeten integrierten Schaltkreis aufgebaut, welche aus der Kfz-Bordnetzspannung von 12 oder 24 V eine von elektrischen Störungen befreite, in engen Toleranzen stabile Betriebsspannung von in der Regel 5 V erzeugen, wofür diese Schaltkreise selbst zwischen mindestens 10 mA und mehreren 100 mA verbrauchen. Es sind auch integrierte Schaltkreise bekannt, in denen die beiden Funktionen des Spannungsreglers 3 und des Spannungswächters 6 zusammengefaßt sind, jedoch bedeutet dieses in der Praxis kaum einen nennenswerten preislichen Vorteil.

Heutige Rechenschaltungen, wie Mikroprozessoren der unteren und mittleren Leistungsklasse mit Taktfrequenzen zwischen 32 kHz und 10 MHz lassen ohne Beeinträchtigung ihrer Funktionalität zumeist weite Versorgungsspannungsbereiche zu - zumeist 2 bis 6 V - und machen damit für ihre Spannungsversorgung hochgenaue Regelungen mit einer zulässigen Schwankungsbreite von nur einigen wenigen Prozent von einer als Einzelwert festgelegten Nennspannung entbehrlich. Überdies ist der Gesamtenergieverbrauch mancher heutiger Kfz-Geräte, wie zB der eines elektronischen Taxameters, derart gering geworden, daß zur Versorgung ihrer Rechenschaltungen gewisse Funktionen der komplexen Schaltkreise zur Spannungsversorgung, wie zB die Abschaltung der Rechenschaltung in den Ruhephasen des Kfz-Gerätes, nicht mehr so bedeutend sind wie früher. Ein Mikroprozessor der erwähnten Art, der bereits bei 2 bis 2,5 V seine volle Leistung erbringt, hat zB eine Stromaufnahme von nur ca. 2 mA.

Die Aufgabe der vorliegenden Erfindung besteht nun darin, eine gattungsgemäße Schaltungsanordnung bedarfsgerecht zu vereinfachen und damit preisgünstiger zu gestalten. Die Aufgabe wird durch die Merkmale des ersten Anspruchs gelöst. Die abhängigen Ansprüche zeigen vorteilhafte Ausgestaltungen der erfindungsgemäßen Lösung.

Der Wegfall der integrierten Schaltkreise 3 und 6 senkt deutlich die Herstellungskosten des Kfz-Gerätes. Auch die Einsparung des Flächenbedarfs für die beiden integrierten Schaltkreise ist aufgrund des Trends zu einem immer kleineren Bauvolumen von Kfz-Geräten sehr vorteilhaft.

Anhand von 4 Figuren soll die Erfindung nun näher erläutert werden.
**Figur 1** zeigt eine Schaltungsanordnung herkömmlicher Bauart.
**Figur 2** zeigt eine erfindungsgemäße Schaltungsanordnung.
**Figur 3** zeigt das zeitabhängige Verhalten der erfindungsgemäßen Schaltungsanordnung.
**Figur 4** zeigt das grundsätzliche Regelverhalten der erfindungsgemäßen Schaltungsanordnung.

Gemäß **Figur 1** war es üblich, Rechenschaltungen 5, wie einen handelsüblichen Mikroprozessor oder eine kundenspezifische Rechenschaltung (ASIC), über einen komplexen integrierten Spannungsregler 3 mit elektrischer Energie zu versorgen. Die Anschlüsse UB und GND bezeichnen die Polaritäten der beiden Bordnetzleitungen Plus und Masse. VCC und VSS sind die Versorgungsanschlüsse der Rechenschaltung 5. Die Diode 1 schützt die Rechenschaltung vor Schäden bei Verpolung der Bordnetzleitungen und beim Auftreten negativer Störspannungen. Der Widerstand 2 dient der Strombegrenzung und schützt zusammen mit den Kondensatoren 7 und 8 vor impulsartigen auf dem Bordnetz befindlichen Störungen. Die Zenerdiode 9 begrenzt Störspannungen in ihrer Amplitude. Die Schaltungsanordnung enthält auch eine Pufferbatterie 14, jedoch nicht mit derselben Funktion wie in der erfindungsgemäßen Schaltungsanordnung. In herkömmlichen Schaltungsanordnungen wird die Pufferbatterie 14 nicht als Spannungsreferenz benutzt, auch wird ihr Lade- bzw. Entladestrom nicht überwacht, sondern sie dient ausschließlich der Aufrechterhaltung der Funktionsfähigkeit der Rechenschaltung bei einem Ausfall des Bordnetzes, damit die Rechenschaltung 5 zB laufende Programme ordnungsgemäß beenden und Daten sichern kann. Die Dioden 4 und 10 entkoppeln jeweils die Pufferbatterie 14 vom Eingang der Schaltungsanordnung, dh vom Netzteileingang, bzw. vom Spannungsregler 3. Der Widerstand 11 begrenzt den Ladestrom für die Pufferbatterie 14. Der Kondensator 12 puffert und sichert den Regelbetrieb des Spannungsreglers 3. Über die Diode 13 wird der Pufferstrom in die Rechenschaltung 5 eingespeist. Ein als integrierter Schaltkreis ausgebildeter Spannungswächter 6 vergleicht die Betriebsspannung am Versorgungsanschluß VCC mit einer im Spannungswächter fest eingestellten Schaltschwelle und gibt bei deren Unterschreitung ein Signal an den Steuereingang PD (Power Down) der Rechenschaltung 5 ab.

Ein Beispiel für eine herkömmliche Schaltungsanordnung, die lediglich der Aufrechterhaltung der Funktionsfähigkeit des an ihr angeschlossenen Verbrauchers dient, zeigt die deutsche Auslegeschrift DE 1 269 231, die eine Schaltungsanordnung für einen unterbrechungslos umschaltbaren, aus einer Batterie oder dem Netz über einen Gleichrichter speisbaren Gleichstromverbraucher betrifft, wobei die Schaltungsanordnung einen Transistor zur unterbrechungsfreien Umschaltung aufweist. Eine durch den Verbraucher auf den Betriebszustand der Batterie rückwirkende Regelung ist nicht offenbart.

**Figur 2** zeigt dazu im Vergleich die vorgeschlagene Verbesserung. Wie zuvor bilden die Diode 21 sowie die Kondensatoren 23 und 24 Elemente einer Schutzbeschaltung. Für die Spannungsversorgung der Rechenschaltung 5 werden jedoch ersichtlich deutlich weniger Bauelemente benötigt. Die beiden integrierten Schaltkreise 3 und 6 sowie die Dioden 4, 9 und 10, der Widerstand 11 und der Kondensator 12 entfallen. Die ohnehin vorhandene Pufferbatterie 25 wird nun aber anders genutzt. Sie bildet eine Spannungsreferenz für das auf die Stromversorgungssituation reagierende Betriebsverhalten der Rechenschaltung 5. In ihrer technischen Ausführung handelt es sich um eine Batterie guter Dauerladefähigkeit, hier zB um eine NiCd-Batterie aus drei in Reihe geschalteten Zellen mit je 1,2 V Nennspannung. Es müssen nun zwei Betriebsarten der Batterie unterschieden werden, der Normalbetrieb und der Pufferbetrieb. Im Normalbetrieb wirkt die Emitter-Basis-Strecke des PNP-Transistors 29 als normale Halbleiterdiode, so daß sich die Spannung am Versorgungsanschluß VCC der Rechenschaltung 5 auf etwa 4,2 V einstellt, nämlich zusammengesetzt aus 3 mal 1,2 V der Batterie zuzüglich 0,6 V der Diodenschwellspannung der Emitter-Basis-Strecke des Transistors 29. Zugleich ist der Transistor 29 leitend, so daß am Steuereingang PD der Rechenschaltung 5 ein logisches HIGH-Signal ansteht, das etwa einen Spannungswert von 3,8 V besitzt (U_{PD} ≅ U₂₅ + U_{BE} - U_{CE} ≅ 3,8 V). Im Pufferbetrieb der Batterie 25 fließt ein Entladestrom über die Diode 28 zur Rechenschaltung 5, so daß die Emitter-Basis-Strecke des Transistors 29 in den Sperrzustand geht, womit zugleich auch die Kollektor-Emitter-Strecke des Transistors 29 sperrt und sich am Steuereingang PD der Rechenschaltung 5 ein logisches LOW-Signal einstellt. Der Widerstand 26 ist der Arbeitswiderstand des Transistors 29 zur Meldung des Signals "Normalbetrieb" oder "Pufferbetrieb" an den Steuereingang PD.

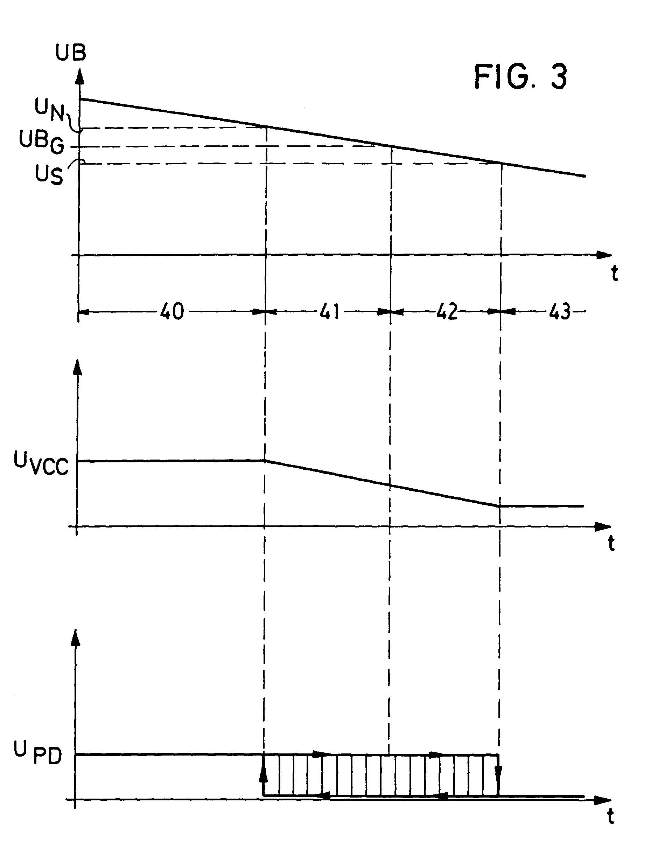

Das Verhalten der erfindungsgemäßen Schaltungsanordnung wird nun unter Einbeziehung der **Figur 3** erläutert. Beim Anliegen der Bordnetzspannung am Anschluß UB fließt der Betriebsstrom für die Rechenschaltung 5 durch den Widerstand 22 direkt zum Versorgungsanschluß VCC. Dabei wird die Spannung am Versorgungsanschluß VCC durch den über die Emitter-Basis-Strecke des Transistors 29 abfließenden Ladestrom für die Pufferbatterie 25 begrenzt. Die Spannung U_{VCC} am Versorgungsanschluß VCC stellt sich ein zu U_{VCC} ≅ U₂₅ + U_{BE}, wobei U₂₅ die an der Pufferbatterie 25 anliegende Spannung bezeichnet. Die Spannung U_{VCC} unterliegt geringen Schwankungen, da sie von der Betriebstemperatur der Schaltungsanordnung und vom Ladezustand der Pufferbatterie 25 abhängig ist. Da die Rechenschaltung 5 jedoch bauartbedingt für einen größeren Betriebsspannungsbereich geeignet ist, sind derartige Schwankungen unschädlich.

Bei der Dimensionierung des Widerstandes 22 muß berücksichtigt werden, daß an ihm der Betriebsstrom für die Rechenschaltung 5 zusammen mit dem Ladestrom für die Pufferbatterie 25 beim Anliegen der Bordnetzspannung UB von nominal 12 V oder 24 V einen Spannungsabfall von U₂₂ = UB - (U₂₁ + U_{BE} + U₂₅) erzeugt, wobei U₂₁ die an der Diode 21 abfallende Spannung bezeichnet. Entsprechend dem in der Figur 3 dargestellten Beispiel ergibt sich bei einer Bordnetzspannung von UB = 12 V für einen angenommenen Betriebsstrom von I_{VCC} = 2 mA für die Rechenschaltung 5 und einen Dauerladestrom von I₂₅ = 0,2 mA für die Pufferbatterie 25 nach R₂₂ = U₂₂ / (I_{VCC} + I₂₅) für den Widerstand 22 als nächster Normwert ein Wert von R₂₂ ≅ 3,3 kΩ.

Wenn die Bordnetzspannung zB auf 14,4 V ansteigt, was dem Höchstwert für ein typisches für 12 V spezifiziertes Bordnetz entspricht, erhöht sich auch der Ladestrom I₂₅ zB auf 0,28 mA, wie dies Datenblättern einer geeigneten Batterie entnommen werden kann. Dieses Verhalten liegt innerhalb zulässiger Toleranzen zum Betrieb einer Batterie mit ausreichender Dauerladefähigkeit. Dieses Betriebsverhalten entspricht dem Bereich 40 in der Figur 3.

Bei sinkender Bordnetzspannung UB nimmt der Ladestrom solange ab, bis der über den Widerstand 22 fließende Strom nur noch die Rechenschaltung 5 versorgen kann. Die Grenzspannung UB_{G} für einen Übergang vom Bereich 41 zum Bereich 42 in der Figur 3 bestimmt sich überschlägig nach UB_{G} ≅ (I_{VCC} * R22) + U₂₅ ≅ 10,2 V. Ein Verharren der Bordnetzspannung UB unterhalb der Grenzspannung UB_{G} ist jedoch unerwünscht, da es infolge einer Selbstentladung der Batterie 25 eine Verminderung ihrer Pufferfähigkeit verursacht. Dieser Betriebszustand einer permanent unter 10 V liegenden Bordnetzspannung (der Bereich 42 und insbesondere der Bereich 43 in Figur 3) ist in der Praxis jedoch nicht von langer Dauer, da er auch andernorts im Fahrzeug spürbare Betriebsstörungen hervorruft, so daß davon ausgegangen werden darf, daß der Ursache für das Absinken der Bordnetzspannung zumeist bald abgeholfen wird. Eine Überwachung dieses Zustandes läßt sich kostengünstig und unschwierig dadurch realisieren, daß über einen Lastwiderstand 27 das Potential am Versorgungsanschluß VCC einem niederohmigen Steuereingang T der Rechenschaltung 5 zugeführt wird, um durch ein in der Rechenschaltung hinterlegtes Programm einen unerwünschten Betrieb der Pufferbatterie 25 zu erkennen und gegebenenfalls durch geeignete Steueranweisungen, die von der Rechenschaltung 5 programmgesteuert ausgelöst werden, Maßnahmen einzuleiten, die einen Bereitschaftsbetrieb der Rechenschaltung 5 bei Unterspannung sicherstellen.

Sinkt die Bordnetzspannung UB unter die Grenzspannung UB_{G} ab, beginnt für die Batterie der Pufferbetrieb (Bereiche 42 und 43 in Figur 3), da sie nun die Rechenschaltung 5 durch einen Stromfluß über die Diode 28 mit Energie versorgt. Schließlich wird der Transistor 29 hochohmig und sperrt ab dem Erreichen seiner Schaltspannung U_{S} vollständig, so daß das Potential U_{PD} am Steuereingang PD einen Spannungswert nahe 0 V annimmt (Bereich 43 in Figur 3). Die Rechenschaltung 5 kann nun Maßnahmen zur Minderung des eigenen Stromverbrauchs einleiten. Diese können darin bestehen, daß die Rechenschaltung 5 nur noch für die Aufrechterhaltung ihrer Funktionsfähigkeit unverzichtbare Tätigkeiten ausführt, zB das Steuern von Timern, den Betrieb eines Uhr-Programms oder das Durchführen unbedingt notwendiger zyklischer Prüfungen. So wird die Stromentnahme aus der Batterie 25 reduziert und es kann sichergestellt werden, daß die Kapazität der Batterie 25 die Dauer des Pufferbetriebes überbrückt.

Durch die Reduzierung des durch die Diode 28 fließenden Entladestromes I₂₈ steigt die Spannung U_{VCC} jedoch am Versorgungsanschluß VCC wieder an, so daß eine Ladung der Batterie 25 über die Emitter-Basis-Strecke des Transistors 29 einsetzt. Damit geht einher, daß am Steuereingang PD der Normalbetrieb signalisiert wird, was dem jetzigen Sachverhalt jedoch nicht wahrheitsgemäß entspricht. Für diesen Fall (Bereich 42 in Figur 3) ist in der Rechenschaltung 5 ein Programm hinterlegt, daß die Rechenschaltung veranlaßt, den normalen Betriebsstrom testweise, zB alle 1 bis 10 Sekunden, für die Dauer weniger Millisekunden vom Netzteil anzufordern. Die dadurch entstehende Mehrbelastung der Pufferbatterie 25 wird durch den erhöhten Ladestrom kompensiert, den die durch das Signal am Steuereingang PD ausgelöste Minderung der Stromaufnahme der Rechenschaltung ermöglicht.

Hat sich die Bordnetzspannung UB über längere Zeit erholt, so daß zB seine Nennspannung U_{N} wieder stabil erreicht ist, kann auch wieder der Normalbetrieb der Batterie 25 gemäß dem Bereichen 40 der Figur 3 angenommen werden. Die zunächst testweise Erhöhung des Versorgungsstromes für die Rechenschaltung 5 bewirkt nun nicht mehr eine Änderung des Signals am Steuereingang PD.

Die hier vorgeschlagene Testschaltung zur Überwachung des Pufferbetriebes der Batterie 25 erfordert nur den Anschluß der Versorgungsspannung U_{VCC} über einen Widerstand 27 an ein in der Rechenschaltung 5 integriertes FET-Schaltelement 30, das schaltungstechnisch vorzugsweise als "Open Drain" ausgeführt und durch eine Steuerleitung T zugänglich ist, sowie ein einfaches Programm für die Erkennung und Korrektur unerwünschter Betriebszustände.

Für den Übergang vom Normalbetrieb in den Pufferbetrieb ist zu beachten, daß im Normalbetrieb deutlich oberhalb der Grenzspannung UBG - in der Figur 3 ist das der Bereich 40 - ein zusätzlicher, zeitlich begrenzter Laststrom mit einer Dauer von wenigen Millisekunden durch den Widerstand 27 und das in der Rechenschaltung befindliche Schaltelement 30 einen zusätzlichen Spannungsabfall am Widerstand 22 verursacht. Das hat in diesem Bereich des Normalbetriebs keine Auswirkungen auf das Verhalten der Schaltungsanordnung. Der Transistor 29 wird nicht sperrend, da die Ladung der Pufferbatterie 25 nicht unterbrochen wird. Während des Betriebs nahe der Grenzspannung UBG - in der Figur 3 ist das der Bereich 41 - wird wie zuvor durch eine zeitlich begrenzte Strombeaufschlagung des Widerstandes 27 ein zusätzlicher Spannungsabfall am Widerstand 22 erzeugt. In diesem Betriebszustand hat dies jedoch zufolge, daß der Transistor 29 wegen des ausbleibenden Ladestromes zur Pufferbatterie 25 oder wegen des eventuell sogar über die Diode 28 fließenden Entladestromes zu sperren beginnt. In der Folge ergeht ein Signal an den Steuereingang PD. Wenn nun jedesmal, während der Testvorgang abläuft, zugleich ein Signal am Steuereingang PD detektiert wird, so kann daraus auf einen schleichenden Übergang der Betriebszustände infolge einer schwächer werdenden Bordnetzspannung geschlossen werden.

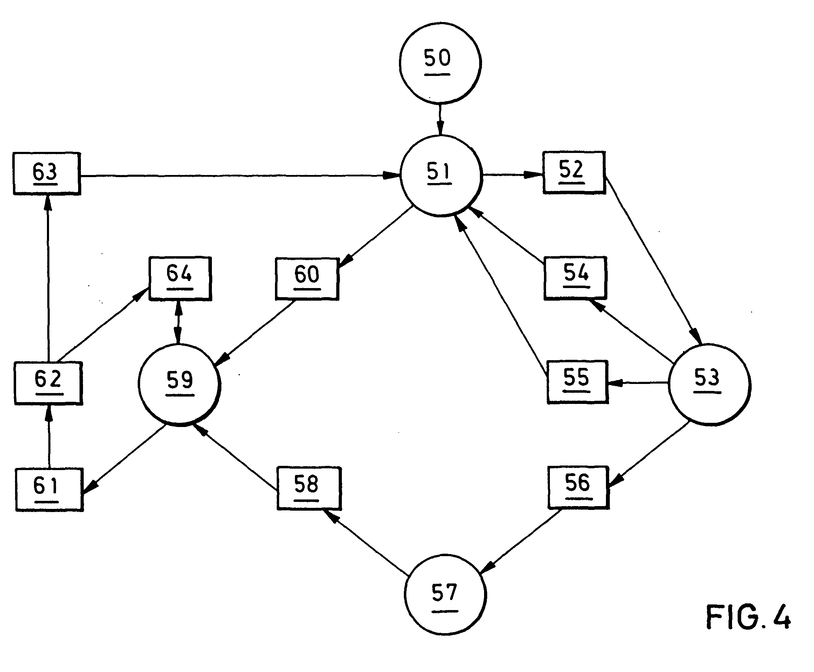

Die **Figur 4** zeigt das grundsätzliche Regelverhalten, das durch das in der Rechenschaltung 5 hinterlegte Programm bewirkt wird. Darin bezeichnen die kreisförmigen Felder die einzelnen quasi statischen Betriebszustände der Schaltungsanordnung, wohingegen die rechteckigen Felder die als Transienten bezeichneten Übergänge zwischen den Betriebszuständen darstellen.

Nach einem Programmstart 50 durch RESET beginnt der Normalbetrieb 51 mit dem Ablauf des Standardprogramms der Rechenschaltung 5. Standardmäßig wird in festen Intervallen, zB alle 500 ms, die Höhe des Potentials am Anschluß VCC gemäß Schritt 52 geprüft. Ergibt das Ergebnis der Prüfung gemäß Schritt 52 die Aktivierung des Testbetriebs 53, wird zunächst gemäß Schritt 54 geschaut, ob am Steuereingang PD ein Signal ansteht. Wird keine Signaländerung festgestellt, gilt fortan wieder der Normalbetrieb 51. Auch wenn gemäß Schritt 55 nur in drei aufeinanderfolgenden Testzyklen eine Signaländerung am Steuereingang PD festgestellt wird, danach aber nicht mehr, so stellt sich der Normalbestriebszustand 51 wieder ein. Wird hingegen zum vierten Mal hintereinander gemäß Schritt 56 eine Änderung am Steuereingang PD festgestellt, geht die Rechenschaltung 5 zunächst vorübergehend in den Bereitschaftsbetrieb 57 über, indem sie ihren eigenen Stromverbrauch für eine bestimmte Zeit von zB 16 Testzyklen von je 500 ms Dauer reduziert. Ist diese Wartezeit gemäß Schritt 58 abgelaufen und hält die Signaländerung am Steuereingang PD an, tritt nun der Pufferbetrieb 59 ein, wobei der Stromverbrauch der Rechenschaltung 5 durch Einschränkung des leistbaren Funktionsumfanges verringert wird. Die Schaltungsanordnung kann auch vom Normalbetrieb 51 dadurch in den Pufferbetrieb 59 übergehen, daß gemäß Schritt 60 am Steuereingang PD selbständig durch das Standardprogramm und ohne Einbeziehung des Testbetriebs 53 eine Signaländerung festgestellt wird. Der Pufferbetrieb 59 bleibt erhalten, solange dies durch ein Signal am Steuereingang PD gemäß Schritt 64 als erforderlich angezeigt wird. Wird jedoch gemäß Schritt 61 durch das Signal am Steuereingang PD die Bereitschaft zum Übergang in den Normalbetrieb angezeigt, wird gemäß Schritt 62 kurzzeitig und zeitgesteuert der Normalbetrieb 51 mit einem normalen, dh vom gegenwärtigen Zustand aus erhöhten Stromverbrauch wiederhergestellt, wobei jedoch noch nicht vollständig alle Funktionen des Normalbetriebes wieder freigegeben werden. Je nach dem Zustand des Signals am Steuereingang PD wird nun entschieden, ob die Schaltungsanordnung gemäß Schritt 64 im Pufferbetrieb 59 verbleibt oder über Schritt 63 in den Normalbetrieb 51 zurückkehrt.

Weitere vorteilhafte Ausgestaltungen der gefundenen Lösung können darin bestehen, den Widerstand 22 als einen temperaturabhängigen Widerstand mit einer PTC-Charakteristik auszubilden. Diese Maßnahme bringt zusätzliche Sicherheit bei Kürzschlüssen, weil dadurch der Stromfluß durch die Rechenschaltung 5 begrenzt wird. Auch wenn Störungen hoher Intensität auf dem Bordnetz liegen, erwärmt sich bei geeigneter Dimensionierung dieser Widerstand durch die an die Pufferbatterie 25 abgeleiteten Impulsströme.

Durch eine weitere Beschaltung in der Art der Testschaltung, nämlich durch einen Widerstand in Reihe mit einem durch die Rechenschaltung 5 steuerbaren Halbleiterschalter zwischen UB und GND, was in der Figur 2 jedoch nicht dargestellt ist, läßt sich eine Schnelladeschaltung für die Pufferbatterie 25 realisieren. Dadurch wird an den Einkoppelwiderstand 22 steuerbar eine zusätzliche Last angehängt, die bedarfsweise an- und abgeschaltet werden kann. Wenn die dafür erforderlichen, steuernden Programmteile derart in das in Figur 4 dargestellte Regelverhalten der Schaltungsanordnung eingebracht werden, daß die Bedürfnisse der Betriebszustände Normalbetrieb und Pufferbetrieb berücksichtigt sind, kann zeitgesteuert dann ein erhöhter Ladestrom zur Pufferbatterie 25 geleitet werden, wenn die zusätzliche Last aus dem Widerstand und dem Halbleiterschalter gerade nicht aktiv ist. Eine solche Maßnahme erscheint dann besonders sinnvoll, wenn mit Situationen gerechnet werden muß, in denen der Pufferbetrieb unverhältnismäßig lange andauert.

## Patentansprüche

1. Schaltungsanordnung zur Stromversorgung einer digitalen Rechenschaltung (5), wobei die Stromversorgung für die Rechenschaltung (5) über die beiden Anschlüsse (UB, GND) einer Gleichspannungsquelle, insbesondere aus dem Bordnetz eines Kraftfahrzeugs, erfolgt und gegebenenfalls über eine geeignete Schutzbeschaltung (21, 23, 24) den beiden Versorgungsanschlüssen (VCC, VSS) der Rechenschaltung (5) zugeführt wird, wobei eine Pufferbatterie (25) und ein Transistor (29) vorgesehen sind, und wobei die Leitfähigkeit der Emitter-Kollektor-Strecke des Transistors (29) vom Verhältnis des Pegels der an den Anschlüssen (UB GND) der Schaltungsanordnung anliegenden Versorgungsspannung zu der an der Pufferbatterie (25) anliegenden Spannung (U₂₅) beeinflußt wird,
**dadurch gekennzeichnet,**
**daß** die Rechenschaltung (5) über mindestens einen Steuereingang (PD) verfügt,
**daß** die Pufferbatterie (25) in Reihe mit der Emitter-Basis-Strecke des Transistors (29) zwischen den Versorgungsanschlüssen (VCC, VSS) der Rechenschaltung (5) angeordnet ist,
**daß** der Kollektor des Transistors (29) zumindest mit dem Steuereingang (PD) der Rechenschaltung (5) verbunden ist,
**daß** in der Rechenschaltung (5) ein Programm hinterlegt ist, das den sich entsprechend der Leitfähigkeit der Emitter-Kollektor-Strecke des Transistors (29) am Steuereingang (PD) der Rechenschaltung (5) einstellenden Spannungspegel dahingehend auswertet, inwieweit der Strombedarf der Rechenschaltung (5) durch Aktivierung oder Deaktivierung bestimmter ihrer Funktionen zu verändern ist.

2. Schaltungsanordnung nach Anspruch 1,
**dadurch gekennzeichnet,**
**daß** die Rechenschaltung (5) über einen weiteren Steuereingang (T) verfügt,
**daß** der Steuereingang (T) gegebenenfalls über einen Lastwiderstand (27) mit dem an dem Pluspol der Stromversorgung hängenden Versorgungsanschluß (VCC) der Rechenschaltung (5) verbunden ist,
**daß** in der Rechenschaltung (5) Mittel vorgesehen sind, die das Absinken der am Versorgungsanschluß (VCC) anliegenden Spannung (U_{VCC}) unter einen Grenzwert (UB_{G}) erkennen,
**daß** im Fall der Unterschreitung des Grenzwertes (UB_{G}) das in der Rechenschaltung (5) hinterlegte Programm den Pegel der am Versorgungsanschluß (VCC) anliegenden Spannung (U_{VCC}) periodisch prüft
und **daß** im Fall der Stabilisierung der am Versorgungsanschluß (VCC) anliegenden Spannung (U_{VCC}) bei ihrem Nennwert (U_{N}) der volle Funktionsumfang der Rechenschaltung (5) wiederhergestellt wird.

3. Schaltungsanordnung nach einem der vorangegangenen Ansprüche,
**dadurch gekennzeichnet,**
**daß** die Aufladung der Pufferbatterie (25) über einen temperaturabhängigen Widerstand (22) erfolgt.

4. Schaltungsanordnung nach einem der vorangegangenen Ansprüche,
**dadurch gekennzeichnet,**
**daß** im Strompfad für den Ladestrom der Pufferbatterie (25) eine von der Rechenschaltung (5) steuerbare Last vorgesehen ist, um durch An- und Abschalten dieser Last eine Schnelladung der Pufferbatterie (25) zu ermöglichen.

## Claims

1. Circuit arrangement for supplying power to a digital computation circuit (5),
in which the power for the computation circuit (5) is supplied via both the connections (UB, GND) of a DC voltage source, in particular from the vehicle power supply system of a motor vehicle, and may be supplied via a suitable protection circuit (21, 23, 24) to the two supply connections (VCC, VSS) of the computation circuit (5) with a buffer battery (25) and a transistor (29) being provided, and
with the conductivity of the emitter-collector path through the transistor (29) being influenced by the ratio of the level of the supply voltage which is applied to the connections (UB, GND) of the circuit arrangement to the voltage (U25) which is applied to the buffer battery (25),
**characterized**
**in that** the computation circuit (5) has at least one control input (PD),
**in that** the buffer battery (25) is arranged in series with the emitter-based junction of the transistor (29) between the supply connections (VCC, VSS) of the computation circuit (5),
**in that** the collector of the transistor (29) is connected at least to the control input (PD) of the computation circuit (5), and
**in that** a programme is stored in the computation circuit (5), which evaluates the voltage level which occurs at the control input (PD) of the computation circuit (5) depending on the conductivity of the emitter-collector path through the transistor (29) in order to determine the extent which the current draw of the computation circuit (5) needs to be changed due to activation or deactivation of certain ones of its functions.

2. Circuit arrangement according to Claim 1,
**characterized**
**in that** the computation circuit (5) has a further control input (T),
**in that** the control input (T) may be connected via a load resistor (27) to that supply connection (VCC) of the computation circuit (5) which is connected to the positive pole of the power supply,
**in that** the computation circuit (5) contains means which identify a drop in the voltage (U_{VCC}) which is applied to the supply connection (VCC) below a limit value (UB_{G}),
**in that**, when the limit value (UB_{G}) is undershot, the programme which is stored in the computation circuit (5) periodically checks the level of the voltage (U_{VCC}) which is applied to the supply connection (VCC)
and **in that**, when the voltage (U_{VCC}) which is applied to the supply connection (VCC) is stabilized at its nominal value (U_{N}), the full functional scope of the computation circuit (5) is made available once again.

3. Circuit arrangement according to one of the preceding claims,
**characterized**
**in that** the buffer battery (25) is charged via a temperature-dependent resistor (22).

4. Circuit arrangement according to one of the preceding claims,
**characterized**
**in that** a load which can be controlled by the computation circuit (5) is provided in the current path for the charging current of the buffer battery (25), in order to allow rapid charging of the buffer battery (25) by switching this load on and off.

## Revendications

1. Arrangement de circuits pour l'alimentation en courant d'un circuit de calcul numérique (5)
ladite alimentation en courant pour ledit circuit de calcul (5) ayant lieu par l'intermédiaire des deux connexions (UB, GND) d'une source de courant continu, tout particulièrement à partir du réseau de bord d'un véhicule automobile et étant acheminée, le cas échéant, par l'intermédiaire de composants complémentaires de protection (21, 23, 24), aux deux connexions d'alimentation (VCC, VSS) du circuit de calcul (5), une batterie tampon (25) et un transistor (29) étant prévus et
la conductibilité du circuit émetteur-collecteur du transistor (29) étant influencée par le rapport entre le niveau de la tension d'alimentation appliquée aux connexions (UB, GND) de l'arrangement de circuits et la tension (U₂₅) appliquée à la batterie tampon (25),
**caractérisé par le fait**
**que** le circuit de calcul (5) dispose d'au moins une entrée de commande (PD),
**que** la batterie tampon (25) est montée en série avec le circuit émetteur-base du transistor (29) entre les connexions d'alimentation (VCC, VSS) dudit circuit de calcul (5),
**que** le collecteur du transistor (29) est relié au moins à l'entrée de commande (PD) du circuit de calcul (5),
**que** dans le circuit de calcul (5) est mémorisé un programme qui exploite le niveau de tension s'établissant conformément à la conductibilité du circuit émetteur-collecteur du transistor (29) à l'entrée de commande (PD) du circuit de calcul (5) en vue de détecter dans quelle mesure le besoin de courant du circuit de calcul (5) doit être varié par l'activation ou la désactivation de certaines de ses fonctions.

2. Arrangement de circuits selon la revendication 1,
**caractérisé par le fait**
**que** le circuit de calcul (5) dispose d'une autre entrée de commande (T),
**que** ladite entrée de commande (T) est reliée, le cas échéant, par l'intermédiaire d'une résistance de charge (27), à la connexion d'alimentation (VCC) reliée au pôle plus de l'alimentation en courant dudit circuit de calcul (5),
**que** dans le circuit de calcul (5) sont prévus des moyens qui détectent l'abaissement de la tension (U_{VCC}) appliquée à la connexion d'alimentation (VCC) au-dessous d'une valeur limite (UB_{G}),
**que**, dans le cas où la valeur limite (UB_{G}) ne serait pas atteinte, le programme mémorisé dans le circuit de calcul (5) vérifie périodiquement le niveau de la tension appliquée à la connexion d'alimentation (VCC) et
**que**, dans le cas d'une stabilisation de la tension (U_{VCC}) appliquée à la connexion d'alimentation (VCC) sur sa valeur nominale (U_{N}), l'étendue complète des fonctions du circuit de calcul (5) sera rétablie.

3. Arrangement de circuits selon l'une quelconque des revendications précédentes,
**caractérisé par le fait**
**que** la charge de la batterie tampon (25) s'effectue par l'intermédiaire d'une résistance variable en fonction de la température (22).

4. Arrangement de circuits selon l'une quelconque des revendications précédentes,
**caractérisé par le fait**
**que** dans le trajet pour le courant de charge de la batterie tampon (25) est prévue une charge pouvant être commandée par le circuit de calcul (5) afin de permettre, par la mise en circuit et hors circuit de cette charge, une charge rapide de ladite batterie tampon (25).
